# EUROPEAN PATENT APPLICATION

(11) **EP 4 026 608 A1**
(43) Date of publication of application: **13.07.2022**
(21) Application number: 22150437.6
(22) Date of filing: 06.01.2022
(51) Int. Cl.: B01D 63/08

(54) **MECHANICAL SUPPORT FOR IMPROVED MEMBRANE PERFORMANCE AND RELIABILITY**

(30) Priority: 08.01.2021 US 202163135446 P
(71) Applicant: Ovivo Inc., Montreal, QC H3A 2R7 (CA)
(72) Inventor: Snodgrass, Michael John, California, 93108 (US)
(74) Representative: Meyer, Ludgerus

(57) **Abstract**

Spacers are attached to membranes of an array of flat plate ceramic membranes. The spacers limit bending of the membranes which can be caused by buildup of solids on the faces of adjacent membranes.

## Description

### Background of the Invention

This application claims benefit of provisional application Serial No. 63/135,446, filed January 8, 2021.

The invention concerns membrane filtration, particularly with ceramic membranes, which may be employed in a wastewater treatment system.

Membranes experience various mechanical stresses during operation that can lead to premature mechanical failure. In particular, submerged flat plate and flat sheet ceramic membranes can experience severe mechanical stress in various wastewater applications.

For example, membrane bioreactors are prone to a phenomenon called dewatering where solids build up between plates due to a variety of reasons. The amount of solids accumulation can be significant to the extent that the outward force from the mass of solids causes the plate to bend, in horizontal bowing movement. With the plate bent, one side is now under tension and susceptible to breaking under movement from the air scour process. Air is bubbled up through the assembly of membranes for the purpose of removing solids from the membrane surfaces. The flow of bubbles over the membrane surface causes the membrane to move back and forth due to changes in pressure. Normally this movement does not present any significant mechanical stress, but if it occurs in the presence of dewatering, the movement can be great enough to cause a membrane to fail, or break.

### Summary of the Invention

A simple mechanical support can be implemented to prevent such mechanical failure in submerged membrane systems. The mechanical support, which can be in a variety of forms, is attached to the membrane so it protrudes out into the space between adjacent membranes. The mechanical supports of adjacent membrane plates may come into contact with one another or have some minimal gap between them, so long as bending is limited sufficiently to prevent membrane breakage. During operation, the mechanical supports prevent the membrane from bending too far, thus reducing the mechanical stress on the membrane. By doing so, the plate can withstand significantly higher loads before mechanical failure compared to a plate in the bent position. When employed in an array of flat plates membranes, the supports prevent the plates from bending, or from significant bending that would threaten integrity of the plate.

The mechanical supports can come in a variety of shapes and materials. In one example, as illustrated in the accompanying drawings, the mechanical supports are U-shaped clips that are attached to the edge or edges of the membrane, maintaining spacing and plate shape as shown. In another example, adhesive or epoxy is applied between the membranes, onto the adjacent membranes. The support can come as a single piece that attaches to only a single membrane, or as an array of supports that simultaneously attach to an array of membranes. The integral array of supports is preferable, for ease of installation and to prevent outward bending of outermost membranes.

Location of the mechanical supports may vary, as they can be placed in the middle section or offset from the middle of the membranes. The mechanical supports can be placed on the top, bottom, middle, or any combination thereof to provide the membranes with a mechanical support. The number of rows may also vary but most systems will employ a single row of mechanical supports.

An object of the invention is to protect ceramic membrane plates with a simple, effective and easily installed device. These and other objects, advantages and features of the invention will be apparent from the following description of preferred embodiments, considered along with the accompanying drawings.

### Description of the Drawings

Figure 1 is a perspective view showing a spacer in the form of a clip in accordance with the invention.
Figure 2 is a perspective view showing spacers secured to upper and lower edges of a flat plate ceramic membrane.
Figure 3 is a perspective view showing a series of the clips arranged approximately at midpoint of the length of a series of spaced, parallel flat plate ceramic membranes.
Figure 4 is a plan view showing the assembly of Figure 3.
Figure 5 is a perspective view showing a series of spacer clips formed as an integral piece.
Figure 6 is a schematic view showing a variation of the spacer clips.

### Description of Preferred Embodiments

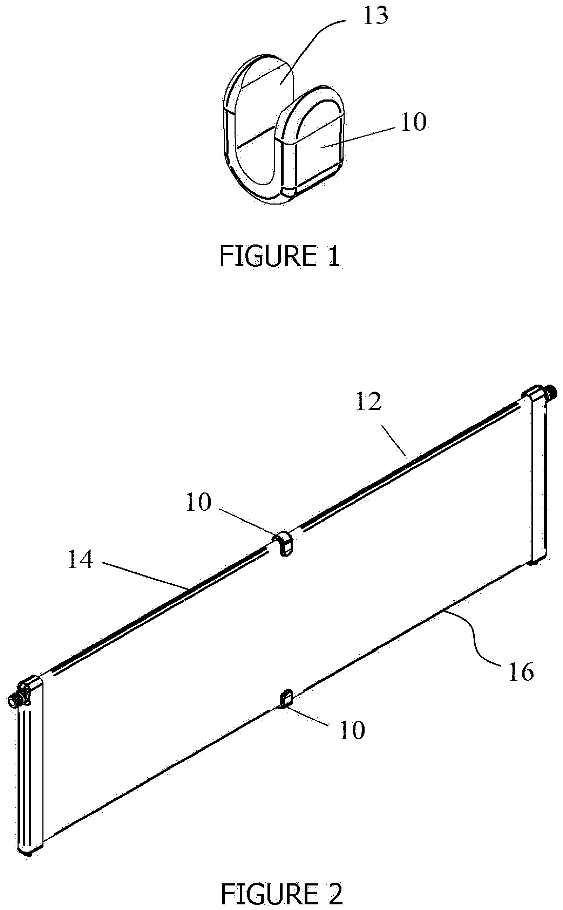

Figures 1 and 2 show a clip 10, in a generally U-shaped configuration, to be placed on edges of a ceramic membrane plate 12, shown in Figure 2. The U-shaped clip 10 is preferably formed of a molded plastic material, such as polyethylene, polypropylene, polyurethane, ABS or PVC. The internal space 13 of the clip is sized to allow the clip to engage firmly onto the upper edge 14 or the lower edge 16 of the membrane plate. The term generally U-shaped is intended to mean having two legs between which opposite faces of the membrane plate are gripped. I.e. the spacer clip 10 is shaped so that it extends over the edge of a membrane and engages the faces of the membrane.

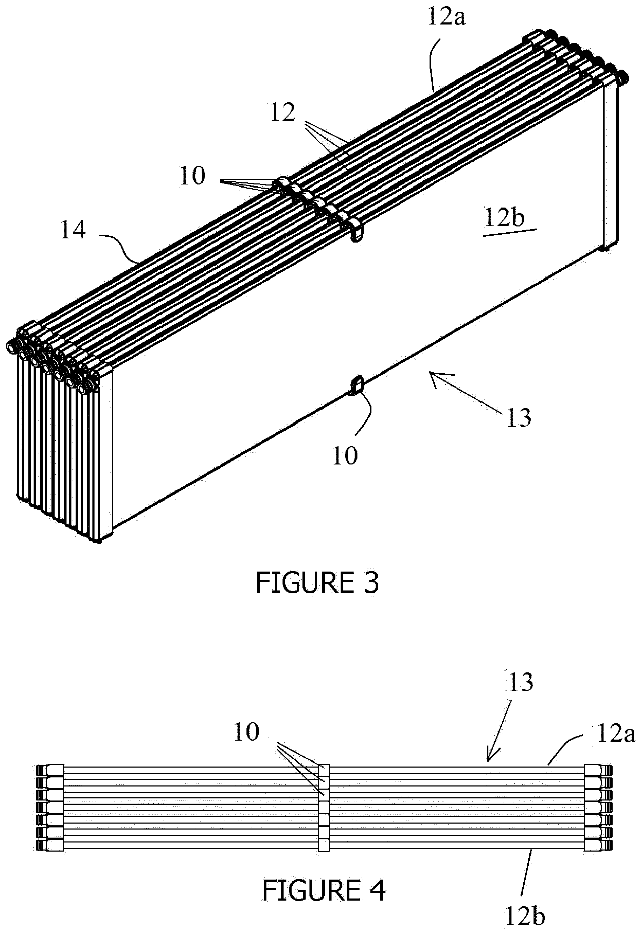

As shown in Figure 3, the membrane plates 12 are ganged together in a bank of, for example, seven membranes as shown in Figure 3 and 4. More or fewer plates can be in a single assembly. The U-shaped clips 10 are shown in an aligned series on the top edges 14 on the gang of membrane plates. In Figure 3 they are also shown as attached to the bottom edges of the plates, in another line of clips. As noted above, the clips are preferably placed at an approximate midpoint along the length of the plates, although several arrays of the clips 10 could be positioned in two linear arrays such as at one-third points or forty percent points if desired.

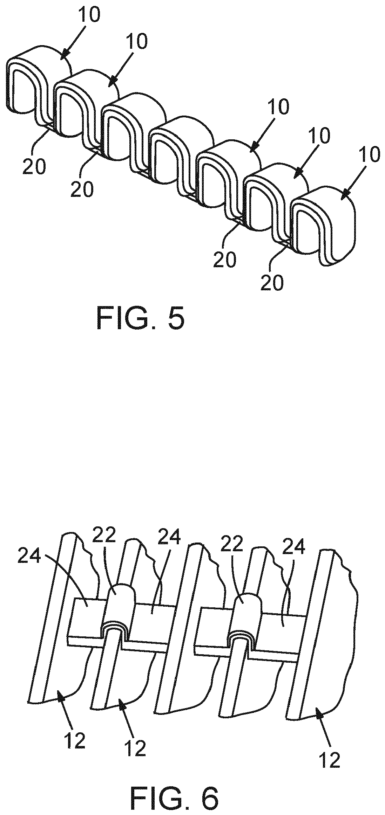

Each array of clips 10 can be assembled of individual clips 10 such as shown in Figures 1 and 2, or the clips can be one integral series of clips, such as shown at 18 in Figure 5. Figures 3 and 4 can also be considered to illustrate such an integral bar of clips. An advantage of the integral array 18 is that at the outermost plates 12a and 12b in Figures 3 and 4, the integral array 18 will restrain those outer plates against outward bending, whereas individual clips could not. Preferably the array 18 of clips is integrally molded.

In a specific embodiment the array 18 of clips 10 can be formed with a larger number of clips, equal to or greater than the expected maximum number of membrane plates that will be ganged together. At the point of divisions between the clips 10, a frangible line (as at 20) can be included, such as perforations or a weakened, thinner line of connection, so that unneeded excess clips can be easily broken off for a particular installation having fewer than the maximum number of plates.

In a ceramic membrane plate of, for example, about one meter length, a limit to bending can be about 0.50 inch (13 mm) deflection at the middle of the plate, without damage of failure or breakage.

Other variations are possible for the spacing devices. In Figure 6 a variation is shown in which alternate ones of the series of membrane plates 12 are fitted with a spacer 22. These spacers grip onto the top edges (and optionally bottom edges as well) and have outward arms 24 that reach out to essentially close the space to the adjacent membrane plate. The spacer clips 22 can include a single-arm clip for an outer membrane plate 12, such as in the case of an even number of membrane plates in the array.

The above described preferred embodiments are intended to illustrate the principles of the invention, but not to limit its scope. Other embodiments and variations to these preferred embodiments will be apparent to those skilled in the art and may be made without departing from the spirit and scope of the invention as defined in the following claims.

## Claims

1. A spacing device on an array of spaced apart ceramic flat plate membranes, comprising:
a series of clips each of which fits closely on and grips an upper or lower edge of at least some of the flat plate membranes,
each spacer device being generally U-shaped and each spacer clip having a pair of legs extending over the edge and engaging against a face of the flat plate membrane, and
each leg having a thickness such that with two adjacent flat plate ceramic membranes the thickness of the legs of two adjacent spacer clips restricts bending of a flat plate membrane to the extent that the flat plate membrane cannot be damaged or fractured by bending under load of solids accumulated between membranes.

2. The spacing device of claim 1, wherein the series of U-shaped spacer clips are secured together side by side, integrally molded as one unit.

3. The spacing device of claim 1, wherein the spacer clips are secured on both top and bottom edges of the flat plate membranes.

4. The spacing device of claim 1, wherein the series of spacer clips are secured at approximately a midpoint along the length of the flat plate membranes.

5. The spacing device of claim 1, wherein the series of U-shaped spacer clips are secured together side by side, integrally molded as one unit, the unit including frangible connections between U-shaped spacer clips so that end U-shaped spacer clips can be broken off the unit as needed for a particular array of membranes.

6. A method for protecting a series or array of flat plate ceramic membranes arranged in spaced, parallel, side by side relationship, comprising:
placing spacers between adjacent flat plate ceramic membranes such that the spacers engage faces of the flat plate membranes,
the spacers having a width transverse to the length of the flat plate ceramic membranes such as to restrict bending of flat plate membranes due to accumulation of solids between adjacent membranes, the bending restriction being sufficient to prevent damage or breakage to the membranes due to such solids buildup.

7. The method of claim 6, wherein the spacers comprise generally U-shaped clips that engage on upper or lower edges of the flat plate ceramic membranes, or on both upper and lower edges.

8. The method of claim 6, wherein the spacers comprise a single, integrally formed bar of plate edge-engaging members, such that when the bar is installed across a series of flat plate ceramic membranes at upper or lower edges, all flat plate ceramic membranes, including outermost membranes, are protected against bending due to buildup of solids between adjacent membranes.

9. The method of claim 6, wherein the spacers comprise generally U-shaped membrane edge-engaging clips, engaged on alternate ones of the array of flat plate ceramic membranes, each clip including two opposed arms each extending toward an adjacent flat plate ceramic membrane.

10. The method of claim 9, wherein the array includes an even number of flat plate ceramic membranes, and further including a one-armed U-shaped membrane-engaging clip having a single arm extending toward an outer one of the flat plate ceramic membranes of the array.

11. The method of claim 8, wherein the bar of plate-engaging members includes frangible connections between plate-engaging members, and including breaking off end plate-engaging members as needed for a particular array of membranes.
